Europäisches Patentamt

(19) European Patent Office

Office européen des brevets

(11) Publication number: **0 329 668 B1**

## (12) EUROPEAN PATENT SPECIFICATION

(45) Date of publication of patent specification: **24.03.93** (51) Int. Cl.⁵: **B60P 3/20**

(21) Application number: **87906837.7**

(22) Date of filing: **19.10.87**

(86) International application number:
**PCT/GB87/00736**

(87) International publication number:
**WO 88/02705 (21.04.88 88/09)**

---

(54) REFRIGERATION OF MULTI-COMPARTMENTED SPACES SUCH AS MULTI-COMPARTMENT VEHICLES.

---

(30) Priority: **17.10.86 GB 8624960**

(43) Date of publication of application:
**30.08.89 Bulletin 89/35**

(45) Publication of the grant of the patent:
**24.03.93 Bulletin 93/12**

(84) Designated Contracting States:
**DE FR GB NL**

(56) References cited:
**GB-A- 2 075 724**
**US-A- 4 003 728**
**US-A- 4 553 584**

**Revue Pratique du Froid & du Condit. d'Air, vol. 36, no. 520, November 1981 (Paris, Fr) C. Fontanel: "La nouvelle génération des navires portes-conteneurs", pages 33-40**

**Patent Abstracts of Japan, vol. 11, no. 64(M-565)(2511), 26 February 1987**

(73) Proprietor: **PETTER REFRIGERATION LIMITED Hamble Southampton SO3 5NJ(GB)**

(72) Inventor: **BARSBY, Alan 3 Weybank Bentley, Farnham Surrey(GB)**

(74) Representative: **Clifford, Frederick Alan et al MARKS & CLERK 57/60 Lincoln's Inn Fields London WC2A 3LS (GB)**

---

EP 0 329 668 B1

## Description

This invention relates to refrigeration techniques for two or more interconnected compartments.

More especially this invention relates to the refrigeration of multi-compartmented vehicles, e.g. delivery vehicles for frozen, chilled or fresh foodstuffs with two or more load compartments, and will be so described herein unless the context requires otherwise.

It is known for vehicle-mounted mechanical refrigeration units to control temperatures in more than one vehicle compartment, so allowing produce needing differing storage temperatures to be carried simultaneously. For example, one compartment of a vehicle may carry deep-frozen produce, another chilled produce and perhaps yet a third compartment may carry ambient temperature goods.

One system for achieving such control over the different temperatures requires uses a conventional transport refrigeration unit having its heat exchanger (which normally absorbs heat) located in that vehicle compartment which is required to be at the lowest temperature. The refrigeration unit controls the temperature within this coldest primary compartment thermostatically. An additional thermostat in another (second) compartment operates an air-bleed means which allows a portion of the said coldest-compartment air to be transferred into the said other compartment until a suffient level of refrigeration has been achieved. At this point, the air-bleed means is disenabled, until cooling is again required. Similarly, this process may be extended by selectively bleeding air from either the first or second compartment into a third compartment at a yet higher temperature.

Whilst transport refrigeration units normally extract heat (in order to depress the temperature of the air surrounding the goods to be carried) it is common practice to enable the same equipment to be selectively capable of heating rather than cooling the air so that the frost damage to any fresh (rather than frozen) cargoes may be prevent when ambient temperatures outside the vehicle are below 0°C. Indeed, many transport refrigeration units will, once a load space temperature has been reduced to a required level, alternatively heat and cool the space to keep it within the desired temperature band.

However, a disadvantage of currently known air-bleed systems for such multi-temperature transportation, is that whilst cooling or heating facility is available in the primary compartment containing the heat exchanger, the subsidiary compartments can, by the relatively cold air transfer. be cooled only. Therefore sub-zero ambient temperatures outside the truck may lead to frost damage of perishable cargoes within a subsidiary compartment. Further, heat may be lost from a secondary compartment not only through the outer walls of the vehicle, but also through a partition wall separating it from the deep-frozen primary compartment. This latter problem may be particularly acute in the cases where the vehicle is divided longitudinally so that the partition wall between compartments at differing temperatures is of large surface area and, because of space constraints, only modestly insulated.

A known solution to this problem is the use of a separate heat exchanger in each of the compartments arranged so that either can heat or cool independently of the other. This arrangement is however complicated, expensive and difficult to control. Moreover, if the vehicle is segmented laterally, the use of several heat exchangers along the length of the vehicle may interfere with the fore-and-aft movement of the partitions to accommodate differing proportions of high and lower temperature produce being carried.

It is the objective of the present invention to provice a means of selectively refrigerating interconnected multiple chambers, e.g. chambers within a vehicle at differing, operator-selectable temperatures. In particular the invention allows a single heat exchanger selectively to refrigerate or heat each of the compartments individually. It is capable therefore of holding a temperature above zero for perishable cargoes even when neighbouring compartments are at deep-freeze temperatures, and/or if the outside ambient temperature is itself sub-zero. A vehicle possessing an installation according to the invention is therefore particularly suitable for carrying delicate perishable cargoes which would be susceptible to frost damage, at the same time as carrying deep frozen produce, and is especially suitable moreover for longitudinally compartmented vehicles.

The present invention largely eliminates the intermixing of air between compartments, a defect inherent in the air-bleed system. Accordingly, hygiene can be improved and cross-tainting of foodstuffs reduced.

The invention consists in a temperature-control installation for two or more spaces, and more especially for the compartments of a multi-compartment temperature-controlled vehicle, comprising a heat exchanger and an air circulation means in an air flow space located to feed a plenum chamber selectively connectable to each space requiring temperature control; characterised in that the air flow space is located between and communicates with a suction plenum chamber and a separate discharge plenum chamber and in that each space requiring temperature control is connected to both the suction plenum chamber and the discharge plenum chamber via selectively operable air control means whereby air heated or cooled by the heat exchanger can be caused to pass selectively through any such space or combination of spaces by selective opening of the air control means for each space or combination.

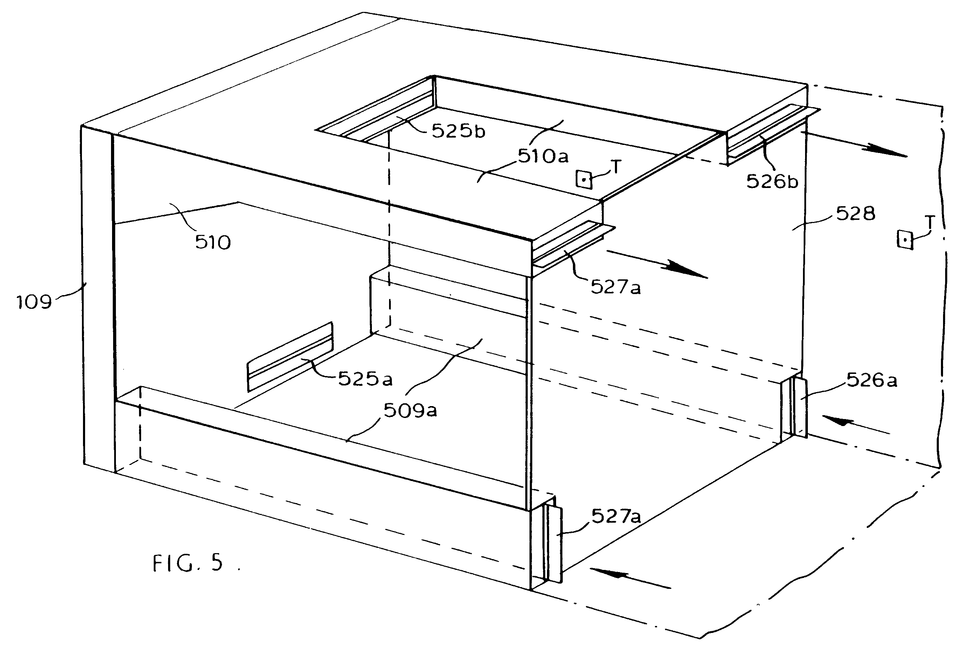

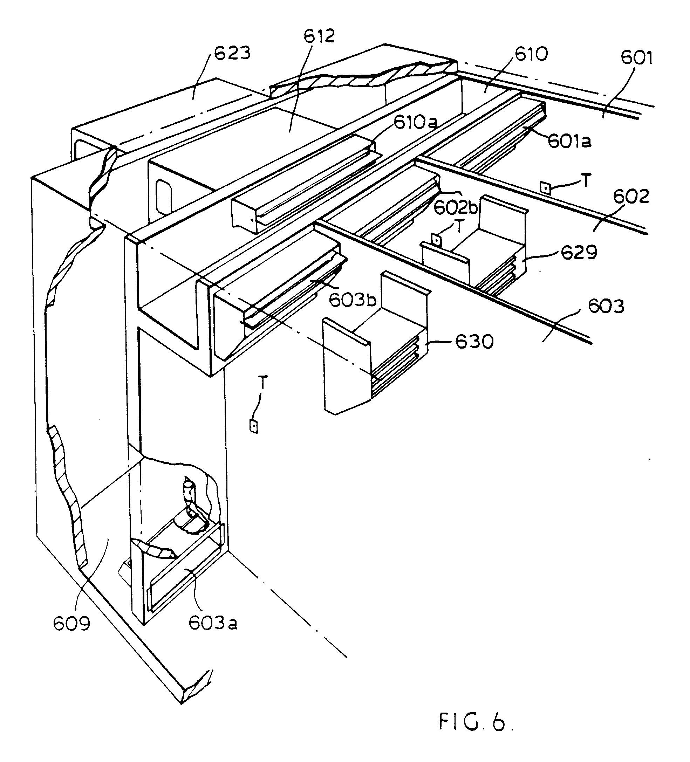

In the publication "Revue Praticue du Froid et du conditionnement d'Air" Vol 36, No 250, November 1981 (Paris) on pages 33-40 in a paper entitled "La Nouvelle Generation des Navires Porte-conteneurs" by C. Fontanel there is described and illustrated a system of supplying cooling air to containers on board a container ship. Figure 5 and 6 illustrate a flat manifold or plenum selectively connectable at upper and lower portions of containers in a vertical stack. This manifold is fed with cooled air from a box-like structure. Each container, however, is connected, for both entry and exhaust of air, to the manifold only and is not connected across two separate plenum chambers.

In operation of the installation the air-circulation means will, when the air control means associated with any particular compartment allows, cause air to pass from the compartment, via the suction plenum chamber, over the heat exchanger and back to the same compartment via the discharge plenum chamber. As the air passes over the heat exchanger it may be heated or cooled preferably as dictated by a thermostat whose temperature probe is in the compartment in question.

At some later time, both air control means associated with this compartment may be arranged to stop air circulation through this compartment, and subsequently both air control means associated with a further compartment may be activated so allowing air from this further compartment to pass via the suction plenum chamber, the heat exchanger and the discharge plenum chamber back into the further compartment, in the course of which passage the air may again be heated or cooled as dictated by a thermostat probe associated with this further compartment.

This process may be repeated until all compartments have been heated or cooled as required. This sequential cooling or heating of each compartment may be repeated indefinitely, the allocation of the heat exchanger output to the various compartments being made on the basis of relative thermostat demands in each of the compartments.

For example, if the temperature control of a compartment containing fresh produce were considered to be more critical than that in a deep frozen compartment, then priority would be given to the former. In this case, only when the fresh produce compartment temperature requirements had been fully met, would the refrigeration unit capacity be diverted to other compartments.

If intermixing of air between compartments is particularly undesirable, only one compartment would be heated or cooled at any given time. However, in instances where intermixing is not of importance, air control means associated with more than one compartment may be selected simultaneously, provided that a similar temperature and service - i.e. either heating or cooling - were required in each.

If, after cooling (or heating) a particular compartment, the next compartment demands the opposite service, it may be desirable, after disengaging the air control means for the compartment, to allow a predetermined period to elapse, during which the heat exchanger may be switched to the new service i.e. from cooling to heating or vice versa. In this way, when the subsequent compartment is opened to the system, the heat exchanger will be already at an appropriate temperature.

The heat exchanger may be the evaporator of a mechanically driven vapour compression refrigeration unit and the air circulating means may be a fan associated with it. The air control means may be electro-mechanically operated shutters interposed between each vehicle compartment and either or both plenum chambers. Alternatively, or additionally, the air control means may embody thermostatically controlled auxiliary fans in order to augment air circulation within the vehicle compartment.

The invention will be further described with reference to the accompanying drawings, in which:-

Figure 1 is a diagram of a prior art installation;

Figure 2 is a diagram of an installation in accordance with the present invention;

Figure 3 is a diagram of the forward part of a refrigerated vehicle containing three parallel longitudinal storage lanes, to be held in different temperature conditions;

Figure 3a is a diagrammatic side view, partly in section, of Figure 3;

Figure 4 is a diagrammatic side view of a variant form of Figure 3a;

Figure 5 shows how the installation of Figure 3 can be adapted with suitable ducting for a laterally partitioned vehicle; and

Figure 6 shows in a diagrammatic view, similar to that of Figure 3, a further embodiment of the present invention using additional electrical resistance heaters.

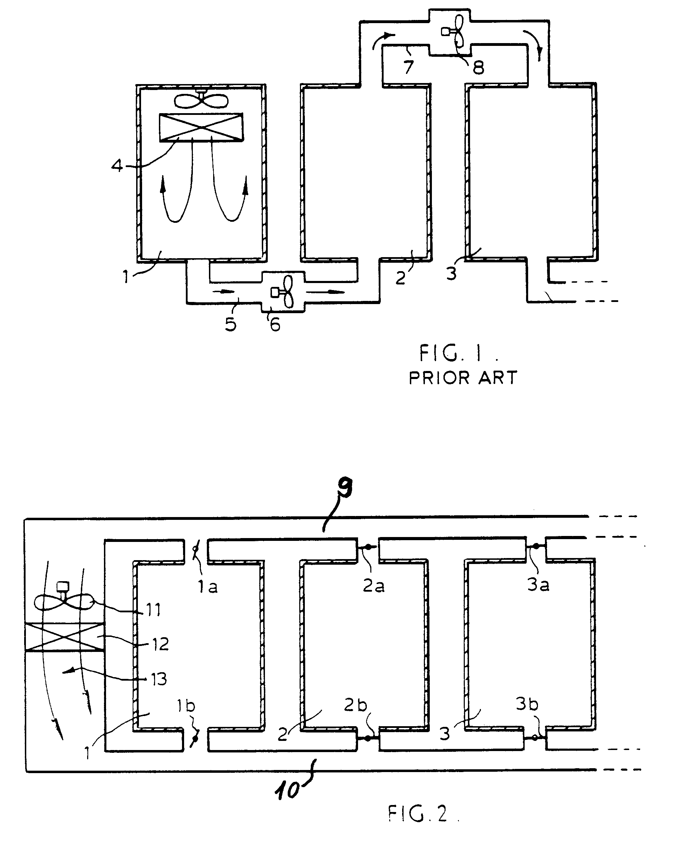

In Figure 1 three vehicle compartments 1, 2 3 are connected in sequence. Compartment 1 is a "frozen food" compartment with cooling coils 4. An air-flow duct 5 with thermostatically controlled fan 6 operating in dependence on a probe (not shown) in compartment 2 bleeds cold air as required from the compartment 1 to the "chill" compartment 2. Likewise, an air-flow duct 7 and thermostatically controlled fan 8 (in dependence on temperature of compartment 3) passes air onwards to the third, ambient, temperature compartment 3. This arrangement has the defects noted above, especially that heating to avoid frost damage is not possible and that tainting of flavours may be encountered.

In Figure 2 the three compartments 1, 2, 3 each communicate by air valves 1a, 1b,2a, 2b and 3a, 3b with plenum suction chamber 9 and plenum discharge chamber 10. Fan 11 and heat-exchanger 12 are located in a further air-flow connection 13 between the plenum chambers 9 and 10. By selectively opening and closing valves 1a, 1b the air can be caused to circulate in chamber 1, a temperature probe (not shown) therein governing the heat-exchanger as required for hot or cold air output, and likewise for valves 2a, 2b or 3a, 3b or any pair of compartments.

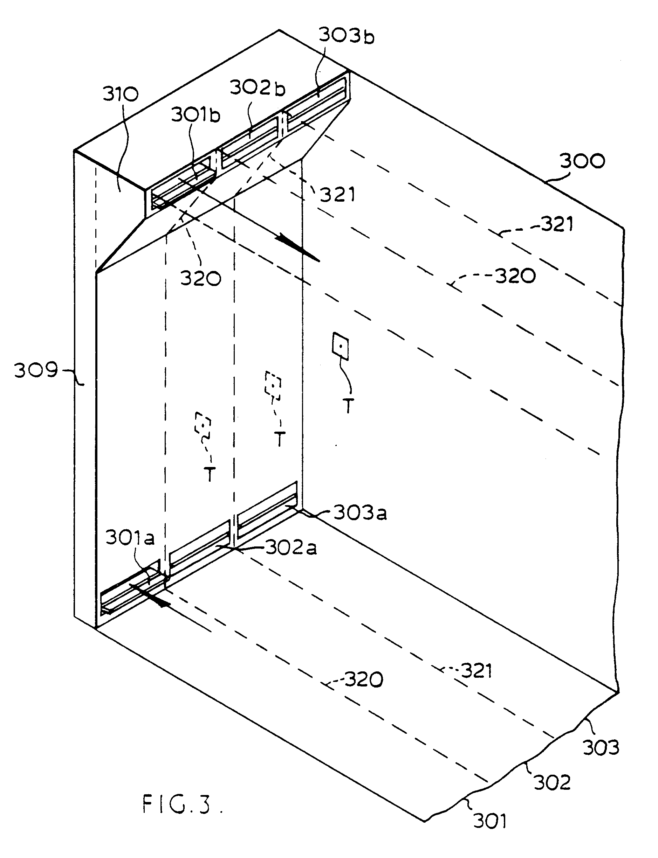

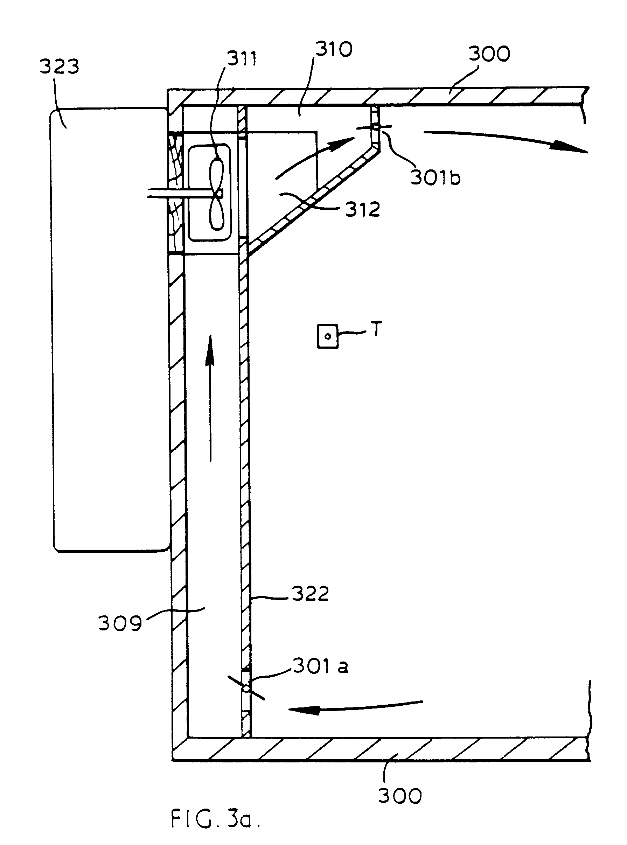

Figure 3 shows, from the rear and to one side, with the roof and nearer side wall removed, the general configuration of another embodiment of the invention. Within the thermally insulated vehicle body 300 are provided three separate lanes 301, 302 and 303 defined between and to each side of longitudinally extending thermally insulating bulkheads positioned at their perimeters where shown by dotted lines 320 and 321 but not otherwise shown for clarity in illustration. Across the whole of the front of the vehicle body 300 is located a plenum suction chamber 309, and across the upper part of the front of the vehicle body is located a discharge plenum chamber 310, the two chambers communicating through the heating/cooling apparatus as described below. At the foot of the front of the vehicle, each opening into the suction plenum chamber 309 are three flap valves 301a, 302a and 303a, one for each storage lane. Similarly, at the top of the front of the vehicle are three further flap valves 301b, 302b and 303b, each opening from the discharge plenum chamber 310 into the respective storage lane. In the embodiment as shown, flaps 301a and 301b are open and the others closed, so that air, cooled or heated as circumstances require, is circulated along the lane 301 and back, as shown diagrammatically by the arrows.

Figure 3a shows a general sectional view through the embodiment of Figure 3. Suction plenum chamber 309 is defined by a false bulkhead 322. At its upper portion, adjacent the discharge plenum chamber 310 is located the fan 311 of a refrigeration unit, whereof the condenser section 323 is located outside the vehicle and the evaporator section 312 inside the discharge plenum.

It will be apparent therefore that air entering at 301a will adopt the temperature of, or a temperature near, that of the evaporator section 312 before being discharged into its same lane at 301b. Thus, by selective operation of the flap valves, and where necessary (as discussed below) suitable prioritisation of operation, each lane can be kept at a temperature suitable for its contents, whether frozen, chilled or ambient. It is moreover envisaged that the system shall if required provide not only different flows or proportions of cooler air as necessary, but also a supply of warm air e.g. if the "ambient temperature" lane is in danger of frost damage from adjacent lanes as from weather conditions. One way of doing this is to supply hot condenser liquid on a temporary basis to the evaporator coils. An alternative, or supplementary, expedient for this purpose is discussed below in relation to Figure 6.

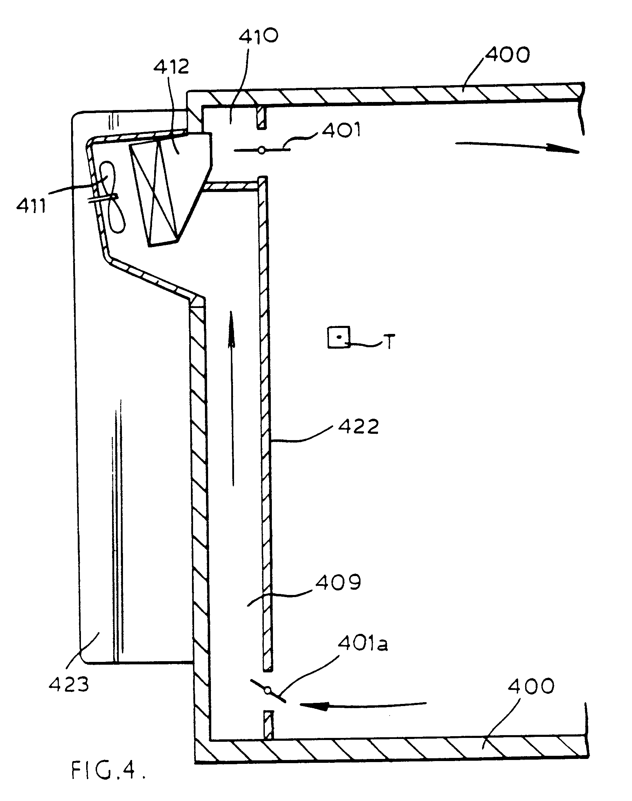

Figure 4 shows a variant embodiment in the same view as Figure 3a. (Analogous numbering is used wherever possible; that is to say, the reference numbers for identical features are those of Figure 3 plus one hundred). In the embodiment of Figure 4 the suction plenum chamber 409 is configured at its upper end to provide a recess 423 extending forwardly in relation to the vehicle and accommodating the fan 411 and in communication with the discharge plenum chamber 410, the evaporator unit 412. The operation is essentially identical with that of the embodiment of Figure 3, but with the practical advantage that the discharge plenum chamber 410 does not protrude into, and take up, valuable internal storage space of the vehicle.

Figure 5 shows diagrammatically how the system can be adopted for a laterally divided vehicle 500, shown with top and one side removed. The heating/cooling system, and details of the suction plenum chamber 509 are generally as before. For air-conveyance purposes, however, the plenum discharge chamber 510 is extended rearwardly as two flat ducts 510a, and two similar flat return ducts 509a connect with the suction plenum chamber 509. For optimum use of internal space it is preferred to keep flat ducts 510a "horizontal" and flat ducts 509a "upright" as shown.

Flap valves 525a and 525b; 526a and 526b and 527a and 527b are provided for selective operation as shown.

The embodiment illustrated has a single insulated lateral partition 528. As shown, the air supply to the forward compartment is discontinued and valves 525a and 526b are both shut. The rearward compartment has air supplied from valves 526b and 527b and drawn off by valves 526a and 527a. If desired, the ducting 509a, 510a could be adapted to feed or exhaust a third compartment at one side and the second (middle) compartment at the other.

Figure 6 shows a major preferred embodiment of the present invention. It is more closely related to Figures 3, 3a and 4 but incorporates additional heating means. The differences do not, however, extend to the refrigeration system as such and this has accordingly only been shown diagrammatically.

As before, three insulated lanes 601, 602 and 603 are selectively supplied with air through flap valves 601b, 602b and 603b fed from a common discharge plenum 610. The lanes are also each provided with flap valves such as 603a (only one is shown, for convenience) which when open allow air into the common suction plenum 609. At its upper portion, this suction plenum 609 is equipped with the evaporator and fan portion 612 of a refrigeration unit with conventional external condenser 623, the evaporator and fan supplying air to the discharge plenum 610 via flap valve 610a.

In the embodiment of Figure 6 there are additionally shown two electrical resistance heaters e.g. three-phase heaters 629 and 630. These could be located in the air-flow from the respective flap valves 602b and 603b, but are preferably ducted with their own fan for air movement. They are electrically connected for control purposes to the same system, described below, as selectively operate the valves and refrigeration unit. Use of such heaters is valuable for more rapid upward reponse in temperature, e.g. to prevent "ambient-storage" foodstuffs from undesired freezing or chilling.

The above systems could be used with purely manual switching, or with time-based switching, but are more typically utilised in a control environment based on measured temperature. Reference T in each drawing is a diagrammatic representation of the thermostat utilised to enable this normal requirement to be fulfilled.

Operation of the unit shown in Figures 3 to 5 is generally as follows:-

The output of the refrigeration unit is directed into a particular lane (or compartment) for a period of time.

Subsequently, the shutters in this lane close and those in another lane are opened, so that the output of the refrigerator may be switched to this new lane. By sequentially applying the refrigeration capacity to the various lanes in turn therefore, the latter may be controlled to specific temperatures. When the refrigeration unit is connected to a particular compartment, the thermostat provided in it controls the refrigeration unit operation for the time being. It is therefore possible for the refrigeration unit to cool or heat any lane according to demand.

The allocation of the refrigeration unit output to particular lanes is made according to thermostat demand in each compartment. Because more than one thermostat may call for heating or cooling at a particular time, it is generally the case that rules for priority must be laid down between the lanes.

The standard controller has a preset priority sequence between compartments. On start-up, the refrigeration unit engine will run at high speed, and the Number 1 priority lane will be heated or cooled as required until its thermostat has been satisfied. The shutters in Number 1 lane will then close and those in the second priority lane will open.

If, subsequently, Number 1 lane drifts out of its control hand, the unit will revert to this lane.

If lanes priority 1 and 2 are satisfied, control passes to the third priority lane.

If all lane are within their respective control temperature hand, all shutters will close and the refrigeration unit will automatically drop to low speed, pending a further requirement for heating or cooling.

On mains standby operation, the system functions in similar manner, with individual lane temperature requirements being satisfied progressively according to the same priority sequence. The refrigeration unit will again switch to heating or cooling according to the service required in any particular lane.

If the temperature requirement of all three compartments have been satisfied, the electric motor will stop until heating or cooling is called for again.

The air control shutters are operated in pairs, i.e. the discharge and air-return shutters assembly in each lane. The shutters are solenoid-operated, and usually arranged for "energise-to-open" control in order to limit the total power required.

In the event that ice or frost built-up on the evaporator begins to effect the heat transfer efficiency of the coil, the refrigeration unit will automatically defrost in a perfectly standard way. During this period the evaporator shutter will be closed to retain heat within the evaportor compartment, and all the shutters will be de-energised.

If the unit as shown in Figures 3 to 5 is operating in, say, a "cooling" mode in a particular lane, and subsequently called upon to change to another lane in which cooling is also required, the appropriate shutters will close and open simultaneously.

If, however, on changing lanes a change is service is required - heating to cooling or cooling to heating - then it is preferred to arrange that both sets of shutters remain closed for a controlled delay period, in order to allow the evaporator to adjust to the new operating conditions prior to discharging air into the new compartment.

For the system to operate successfully, it is essential that once the set temperature has been achieved in a particular compartment, it will only slowly drift from this temperature. Unless this is the case, the priority control system will dictate that the fridge unit repeatedly returns to this compartment to restore its temperature control, resulting in poor control of the lower priority lanes.

In order to achieve stable temperature, an excellent standard of insulation between lanes is required and any air leakage between lanes - for example through brush seals on doors - must be kept to a minimum. In addition, it is much to be preferred that produce be pre-cooled to desired carrying temperatures before loading.

Good air circulation is also important in practice, and space must be available for airflow over and around the cargo, with good access to the air return shutters.

A 3-lane controller unit can be provided to operate on preset priorities of:-

1. Offside Lane

2. Centre Lane

3. Nearside Lane

Indicator lamps may show:-

Unit running

Heating

Cooling

Defrost

All lanes satisfied

An indicator lamp can also be provided for each lane to show when any particular compartment is selected, together with a second lamp showing when the shutters are open.

Each lane has an individual thermostat T, and the temperature setting unit for this can be within the control box. In addition an isolating switch can be provided for each lane so that any compartment which does not require temperature control may be eliminated from the system.

Operation of the unit shown in Figure 6 is broadly similar but includes means for operating the heaters in correspondence with desired conditions.

The possibilities are readily given as shown in the Table.

| LANE NO. | | |
|---|---|---|
| 601 | 602 | 603 |
| F | C | A |
| F | C | C |
| F | F | A |
| F | F | C |
| C | A | A |
| C | C | A |

F = FREEZE

C = CHILL

A = CONTROLLED AMBIENT

I.E. PLANTS ETC

where F indicates a freezing compartment, C a chill compartment and A a controlled ambient compartment e.g. for pot plants, cut flowers etc.

The system incorporates the following methods of cooling and heating.

(a) Refrigeration unit cooling lanes 601, 602 and 603.

(b) Refrigeration heating lane 601

(c) Heating by 3 phase ducted heaters lanes 602 and 603.

In operation, if all three thermostats are set up such that cooling is required in all three lanes, the shutters in a particular lane will open and the refrigeration unit output directed to this lane, for a period of time. Subsequently the shutters willclose and those of another lane open thus directing the refrigeration unit output to this new lane.

If, however, the thermostats are set such that whilst cooling lane 1, heating is required in lanes 2 and 3 the duct heaters will be energised thus enabling the temperature to be raised to the thermostat setting.

It is therefore with this system not only possible to cool or heat any lane according to demand, but also (if certain conditions require to be cooling one lane whilst simultaneously heating another.

EP 0 329 668 B1

As before, however, priority rules should preferably be laid down e.g.

| REFRIGERATION UNIT | | |
|---|---|---|
| PRIORITY | LANE NO. | OPERATION. |
| 1 | 601 | COOL/HEAT |
| 2 | 602 | COOL |
| 3 | 603 | COOL |

| DUTY HEATERS | | |
|---|---|---|
| PRIORITY | LANE NO. | OPERATION |
| 1 | 602 | HEAT |
| 2 | 603 | HEAT |

On start-up the refrigeration unit engine will run at high speed and the No. 1 priority lane will be cooled or heated as required until its thermostat has been satisfied. The shutters in priority lane will close. Should cooling be required in priority lane 2, these will then open.

If subsequently, priority lane 1 drifts out of its control band, the unit will revert to the this lane.

If lanes priority 1 and 2 are satisfied and cooling is required in priority lane 3, control passes to this lane.

If while attempting to cool priority lane 3, if either priority 2 lane requires cooling or priority 1 lane requires cooling or heating, control will pass to one of these lanes.

The duct heaters in lanes 2 and 3 have priority sequences typically such that only one set of heaters can be energised at a time, lane 2 being priority 1. Therefore in operation should heating be required in lanes 2 and 3, the heaters in lane 2 will be energised until the thermostat setting is reached whereupon control will pass to lane 3.

If whilst heating lane 3 the temperature in lane 2 falls such that heating is required control will revert to this lane.

If all lanes are within their respective control temperature bands. all shutters will close, heaters de-energise and the refrigeration unit will automatically drop to low speed pending a further requirement for heating or cooling.

The operation requirements in respect of electrical drive to the refrigeration unit; defrost; and shutters are generally as described above. As to duct heaters installed in lanes 602 and 603, these are typically ech equipped with a 1.5 kw phase heater and a 120 watt 250mm dia. 3 phase fan.

Power to the heaters and fan can be supplied via an alternator driven from the refrigeration unit while onengine drive and via the mains when on electric standby operation.

Vehicle requirements, as to insulation, stackage and nature of control unit are generally as described above.

**Claims**

1. A temperature control installation for two or more spaces, and more especially for the compartments of a multi-compartment temperature-controlled vehicle, comprising a heat exchanger (12, 312 etc.) and an air circulation means (11, 311; etc) in an air flow space (13) located to feed a plenum chamber selectively connectable to each space requiring temperature control; characterised in that the air flow space (13) is located between and communicates with a suction plenum chamber (9, 309 etc) and a separate discharge plenum chamber (10, 310 etc) and in that each space (1, 2, 3; 301, 302, 303; etc) requiring temperature control is connected to both the suction plenum chamber (9, 309; etc) and the discharge plenum chamber (10; 310 etc) via selectively operable air control means 1a, 1b; 2a, 2b; 3a, 3b; 301a/b, 302a/b, 303a/b; etc) whereby air heated or cooled by the heat exchanger (12) can be caused to pass selectively through any such space (1, 2, 3; 301, 302, 303; etc) or combination of spaces by selective opening of the air control means for each space or combination.

7

2. An installation as claimed in claim 1 in which the heat exchanger (12, 312, 412, 612) is the evaporator of a mechanically driven vapour compression refrigeration unit, and the air circulation means is a fan (11, 311, 411, 611) associated with the evaporator.

3. An installation as claimed in claim 2 which further comprises one or more electrical resistance heaters (629, 630) located in at least one of the said spaces (601, 602, 603).

4. An installation as claimed in claim 3 in which the or each electrical resistance heater (629, 630) is located near and downstream of the air inlet (602b, 603b) from the discharge plenum chamber (610).

5. An installation as claimed in claim 3 in which the electrical heaters (629, 630) are themselves each provided into a fan.

6. An installation as claimed in claim 2 in which said air control means (1 a/b, 2 a/b, 3 a/b; 301 a/b, 302 a/b, 303 a/b; etc; 525/6/7 a/b) are electromechanically operable shutters, located between each vehicle compartment (1, 2, 3; 301/2/3; etc) and either or both plenum chambers (9, 10; 309, 310; etc) to provide for selective passage of heated or cooled air therethrough.

7. An installation as claimed in claim 6 further comprising timer means operatively connected to open and close the selectively operable air control means 1, 2, 3 a/b; etc) Sequentially and/or for predetermined periods.

8. An installation as claimed in claim 2 or 3 further comprising thermostat means (T) located in at least one of said spaces (1, 2, 3; 301, 302, 303; etc) and operatively connected to open and close the selectively operable air control means, and/or to switch on or off any electrical heaters (629, 630), in dependence upon the temperature in the said space.

9. An installation as claimed in claim 8 which further includes a logic system located for operation between on the one hand the said thermostat means (T) and on the other hand the selectively operable air control means (1, 2, 3 a/b; 301, 302, 303 a/b; etc) and any heaters (629, 630), said logic system being programmed to prioritize demands for heating or cooling in the respective spaces in a predetermined fashion.

10. An installation as claimed in claim 2 in combination with a motor vehicle body (300, 400; etc) internally subdivided into longitudinal thermally insulated storage lanes (301, 302, 303; etc).

11. An installation as claimed in claim 10 comprising a false bulkhead (322, 422; etc) extending across the width of the vehicle forwardly of the lanes (301, 302, 303; etc) and thereby defining a suction plenum chamber (309; etc) communicating with each lane by individual and selectively operable air control means (301a), 302a), 303a)) towards the lower edge thereof.

12. An installation as claimed in claim 11 further comprising a transversely extending chamber (310, 410; etc) across an upper part of the vehicle to define a discharge plenum chamber, and including selectively operable air control means (301b), 302b), 303b); etc), one for each lane.

13. An installation as claimed in claim 10 comprising three such insulated lanes (301, 302, 303; etc).

14. An installation as claimed in claim 12 in which two or more of the said lanes (301, 302, 303; etc) possess said electrical heaters (629, 630).

15. An installation as claimed in claim 2 in combination with a motor vehicle body (300, 400; etc), the internal space of which is subdivided into lateral thermally insulated storage chambers (301, 302, 303; etc) communicating by longitudinally extending ducting to the plenum and discharge chambers.

**Patentansprüche**

1. Temperaturregelungsanlage für zwei oder mehr Räume und insbesondere für Abteile eines mehrfach unterteilten, temperaturgeregelten Fahrzeugs, die einen Wärmeaustauscher (12, 312 usw.) und eine

8

Luftumlaufeinrichtung (11, 311 usw.) in einem Luftstromraum (13) umfaßt, die so angeordnet ist, daß sie eine Luftkammer speist, die wahlweise mit jedem Raum verbunden werden kann, dessen Temperatur geregelt werden muß; dadurch gekennzeichnet, daß der Luftstromraum (13) zwischen einer Ansaugluftkammer (9, 309 usw.) und einer separaten Ausströmluftkammer (10, 310 usw.) angeordnet ist und mit ihnen in Verbindung steht, und dadurch, daß jeder Raum (1, 2, 3; 301, 302, 303 usw.), dessen Temperatur geregelt werden muß, über wahlweise zu betätigende Luftregulierungseinrichtungen (1a, 1b; 2a, 2b; 3a, 3b; 301a/b, 302a/b, 303a/b usw.) sowohl mit der Ansaugluftkammer (9, 309 usw.) als auch mit der Ausströmluftkammer (10, 310 usw.) verbunden ist, wodurch durch den Wärmeaustauscher (12) erwärmte oder gekühlte Luft wahlweise durch jeden dieser Räume (1, 2, 3; 301, 302, 303 usw.) oder eine Kombination von Räumen strömen kann, indem die Luftregulierungseinrichtungen wahlweise für jeden Raum oder jede Kombination geöffnet werden können.

2. Anlage nach Anspruch 1, wobei der Wärmeaustauscher (12, 312, 412, 612) der Verdampfer eines mechanisch angetriebenen Verdichterkühlaggregates ist, und die Luftumlaufeinrichtung ein Gebläse (11, 311, 411, 611) ist, das mit dem Verdampfer verbunden ist.

3. Anlage nach Anspruch 2, die weiterhin einen oder mehrere elektrische Widerstandsheizvorrichtungen (629, 630) umfaßt, die in wenigstens einem der Räume (601, 602, 603) angeordnet sind.

4. Anlage nach Anspruch 3, wobei die elektrischen Widerstandsheizvorrichtungen (629, 630) in der Nähe und stromab des Lufteinlasses (602b, 603b) von der Ausströmluftkammer (610) angebracht ist.

5. Anlage nach Anspruch 3, wobei die elektrischen Heizvorrichtungen (629, 630) selbst in einem Gebläse angebracht sind.

6. Anlage nach Anspruch 2, wobei die Luftregulierungseinrichtungen (1 a/b, 2 a/b, 3 a/b, 301 a/b, 302 a/b, 303 a/b, usw.; 525/6/7 a/b) elektromechanisch zu betätigenden Klappen sind, die zwischen jedem Fahrzeugabteil (1, 2, 3; 301/2/3 usw.) und einer oder beiden Luftkammern (9, 10; 309, 310 usw.) angeordnet sind, um wahlweise das Strömen von erwärmter oder gekühlter Luft durch selbige zu ermöglichen.

7. Anlage nach Anspruch 6, die weiterhin Zeitgebereinrichtungen umfaßt, die wirksam angeschlossen sind und die wahlweise zu betätigenden Luftregulierungseinrichtungen (1, 2, 3, a/b usw.) nacheinander und/oder für bestimmte Zeiten öffnen und schließen.

8. Anlage nach Anspruch 2 oder 3, die weiterhin eine Thermostateinrichtung (T) umfaßt, die in wenigstens einem der Räume (1, 2, 3; 301, 302, 303) angebracht und wirksam angeschlossen ist, und die in Abhängigkeit von der Temperatur in dem Raum die wahlweise zu betätigenden Luftregulierungseinrichtungen öffnet und schließt und/oder elektrische Heizvorrichtungen (629, 630) an- oder abschaltet.

9. Anlage nach Anspruch 8, die weiterhin ein Logiksystem, das zwischen der Thermostateinrichtung (T) auf der einen Seite und den wahlweise zu betätigenden Luftreguliervngseinrichtungen (1, 2, 3 a/b; 301, 302, 303 a/b usw.) und Heizvorrichtungen (629, 630) auf der anderen Seite wirksam angeordnet ist, enthält, wobei das Logiksystem so programmiert ist, daß es die Aufforderungen zum Heizen oder Kühlen in den jeweiligen Räumen auf vorgegebene Weise nach Priorität behandelt.

10. Anlage nach Anspruch 2 zusammen mit einem Kraftfahrzeugaufbau (300, 400 usw.), der innen längs in thermisch isolierte Ladebahnen (301, 302, 303 usw.) unterteilt ist.

11. Anlage nach Anspruch 10, die eine Zwischenwand (322, 422 usw.) umfaßt, die über die Breite des Fahrzeuges vor den Bahnen (301, 302, 303 usw.) verläuft und so eine Ansaugluftkammer (309 usw.) bildet, die mit jeder Bahn durch einzeln und wahlweise zu betätigende Luftregulierungseinrichtungen (301a, 302a, 303a) an deren unterem Rand in Verbindung steht.

12. Anlage nach Anspruch 11, die weiterhin eine sich quer erstreckende Kammer (310, 410 usw.) über einem oberen Teil des Fahrzeuges umfaßt, die eine Ausströmluftkammer bildet und wahlweise zu betätigenden Luftregulierungseinrichtungen (301 b, 302 b, 303b) enthält, von denen jeweils eines zu einer Bahn gehört.

**13.** Anlage nach Anspruch 10, die drei derartige isolierte Bahnen (301, 302, 303 usw.) umfaßt.

**14.** Anlage nach Anspruch 12, wobei zwei oder mehr der Bahnen (301, 302, 303) die elektrischen Heizvorrichtungen (629, 630) besitzen.

**15.** Anlage nach Anspruch 2 in Kombination mit einem Kraftfahrzeugaufbau (300, 400 usw.), dessen Innenraum in seitlich isolierte Ladekammern (301, 302, 303 usw.) unterteilt ist, die über längs verlaufende Leitungen mit der Luft- und der Ausströmkammer in Verbindung stehen.

**Revendications**

**1.** Une installation de réglage de la température pour deux ou plusieurs espaces, plus particulièrement pour les compartiments d'un véhicule à compartiments multiples comportant un réglage de température, comprenant un échangeur de chaleur (12, 312, etc.) et un moyen de circulation d'air (11, 311; etc.) dans un espace d'écoulement d'air (13) agencé en vue de l'alimentation d'une chambre de répartition d'air, pouvant être connectée sélectivement à chaque espace exigeant un réglage de la température; caractérisé en ce que l'espace d'écoulement d'air (13) est agencé entre un caisson d'aspiration (9, 309, etc.) et un caisson de décharge séparé (10, 310, etc.) et communique avec ceux-ci, et en ce que chaque espace (1, 2, 3; 301, 302, 303; etc.) exigeant un réglage de la température est connecté au caisson d'aspiration (9, 309; etc.) et au caisson de décharge (10; 310, etc.) par l'intermédiaire d'un moyen de réglage d'air à commande sélective 1a, 1b; 2a, 2b; 3a, 3b; 301a/b, 302a/b, 303a/b; etc.), l'air chauffé ou refroidi par l'échangeur de chaleur (12) pouvant être entraîné à traverser sélectivement l'un quelconque de ces espaces (1, 3, 3; 301, 302, 303; etc.) ou une combinaison d'espaces par ouverture sélective du moyen de réglage de l'air pour chaque espace ou combinaison d'espaces.

**2.** Une installation selon la revendication 1, dans laquelle l'échangeur de chaleur (12, 312, 412, 612) est l'évaporateur d'une unité de réfrigération à compression de vapeur à commande mécanique, et dans laquelle le moyen de circulation d'air est un ventilateur (11, 311, 411, 611) associé à l'évaporateur.

**3.** Une installation selon la revendication 2, comprenant en outre une ou plusieurs unités de chauffage à résistance électrique (629, 630), agencées dans au moins un des dits espaces (601, 602, 603).

**4.** Une installation selon la revendication 3, dans laquelle la ou les unités de chauffage à résistance électrique (629, 630) sont agencées à proximité et en aval de l'orifice d'entrée d'air (602b, 603b) du caisson de décharge (610).

**5.** Une installation selon la revendication 3, dans laquelle les unités de chauffage électriques (629, 630) sont eux-mêmes agencées chacun avec un ventilateur.

**6.** Une installation selon la revendication 2, dans laquelle lesdits moyens de réglage de l'air (1 a/b, 2 a/b, 3 a/b; 301 a/b, 302 a/b, 303 a/b; etc.; 525/6/7 a/b) sont des clapets à commande électro-mécanique, agencés entre chaque compartiment du véhicule (1, 2, 3; 301/2/3; etc.) et entre l'un des caissons ou entre les deux (9, 10; 309, 310; etc.) en vue de permettre une traversée sélective de l'air de chauffage ou de refroidissement.

**7.** Une installation selon la revendication 6, comprenant en outre un moyen de synchronisation connecté pendant le fonctionnement pour ouvrir et fermer les moyens de réglage d'air à commande sélective (1, 2, 3 a/b; etc.) de façon séquentielle et/ou pour des périodes déterminées.

**8.** Une installation selon les revendications 2 ou 3, comprenant en outre un moyen de thermostat (T) agencé dans au moins un des dits espaces (1, 2, 3; 301, 302, 303; etc.), connecté pendant le fonctionnement pour ouvrir et fermer les moyens de réglage de l'air à commande sélective, et/ou pour mettre en service ou hors service l'une quelconque des unités de chauffage électriques (629, 630) en fonction de la température dans ledit espace.

**9.** Une installation selon la revendication 8, englobant en outre un système logique agencé pendant le fonctionnement entre d'un côté le moyen de thermostat (T) et d'un autre côté les moyens de réglage de l'air à commande sélective (1, 2, 3 a/b; 301, 302, 303 a/b; etc.) et l'une quelconque des unités de chauffage (629, 630), ledit système logique étant programmé pour affecter une priorité aux demandes de chauffage ou de refroidissement dans les espaces respectifs selon un système déterminé.

10. Une installation selon la revendication 2, en combinaison avec une carrosserie de véhicule (300, 400; etc.) subdivisé à l'intérieur en allées de stockage longitudinales à isolation thermique (301, 302, 303; etc.).

11. Une installation selon la revendication 10, comprenant une cloison de séparation factice (322, 422; etc.) s'étendant à travers la largeur du véhicule, à l'avant des allées (301, 302, 303; etc.) et définissant ainsi un caisson d'aspiration (309; etc.) communicant avec chaque allée par des moyens de réglage de l'air individuels à commande sélective (301a, 302a, 303a) en direction du bord inférieur correspondant.

12. Une installation selon la revendication 11, comprenant en outre une chambre à extension transversale (310, 410; etc.) le long d'une partie supérieure du véhicule, pour définir un caisson de décharge, et englobant dans chaque allée un moyen de réglage de l'air à commande sélective (301b, 302b, 303b; etc.).

13. Une installation selon la revendication 10, comprenant trois allées isolées (301, 302, 303; etc.)

14. Une installation selon la revendication 12, dans laquelle deux ou plusieurs des dites allées (301, 302, 303; etc.) possèdent des unités de chauffage électriques (629, 630).

15. Une installation selon la revendication 2, en combinaison avec une carrosserie de véhicule (300; 400; etc.), dont l'espace intérieur est subdivisé en chambres de stockage latérales à isolation thermique (301, 302, 303; etc.) communicant par l'intermédiaire de conduits s'étendant longitudinalement en direction des caissons d'aspiration et de décharge.

FIG. 1 .
PRIOR ART

FIG. 2 .

FIG.3.

FIG. 3a.

FIG.4.

FIG. 5.

FIG. 6.